# EUROPÄISCHE PATENTSCHRIFT

(11) **EP 0 530 721 B1**
(45) Veröffentlichungstag und Bekanntmachung des Hinweises auf die Patenterteilung: **19.06.1996**
(21) Anmeldenummer: 92114815.1
(22) Anmeldetag: 29.08.1992
(51) Int. Cl.: F28F 3/04, F02K 9/64

(54) **Vorrichtung zum Steigern des Wärmeübergangs zwischen einer Wand und einem Wärmeträgerfluid**
Device to increase the heat-transfer between a wall and a heat-exchanger fluid
Dispositif pour accroître la transmission de chaleur entre une paroi et un fluide d'échange de chaleur

(30) Priorität: 06.09.1991 DE 4129598
(43) Veröffentlichungstag der Anmeldung: 10.03.1993
(73) Patentinhaber: Ruhrgas Aktiengesellschaft, D-45117 Essen (DE)
(72) Erfinder: Altemark, Detlef, Dr., W-4270 Dorsten 1 (DE); Saul, Achim, Dr., W-4600 Dortmund 30 (DE); Fiebig, Martin, Prof., Dr., W-4630 Bochum 1 (DE)
(74) Vertreter: Zenz, Joachim Klaus, Dipl.-Ing.

(56) Entgegenhaltungen:
- EP-A- 0 338 704
- US-A- 2 834 582
- US-A- 2 870 998

## Beschreibung

Die Erfindung betrifft einen Wärmeübertrager nach dem Oberbegriff des Patentanspruchs 1 bzw. nach dem Oberbegriff des Patentanspruchs 3.

Bei Wärmeübergängen ist man häufig bestrebt, die Intensität zu steigern, d.h., den Wärmeübergangskoeffizienten zu erhöhen, um dadurch bestimmte Fluid- und/oder Materialtemperaturen zu erreichen. Dabei ist zu beachten, daß alle Maßnahmen zur Steigerung des Wärmeübergangs die Reibungsverluste erhöhen. Dies kann zu Schwierigkeiten führen, wenn die zur Verfügung stehende Druckdifferenz gering ist.

Beispielsweise läßt sich bei Kanalströmungen der Wärmeübergang durch Verminderung des hydraulischen Durchmessers steigern. Sehr viel stärker ist allerdings der Anstieg des Druckverlustes.

Günstige Verhältnisse werden mit einem bekannten Wärmeübertrager der eingangs genannten Art erzielt (DE-OS 37 39 619), bei dem man Längswirbel in Form von sogenannten Tütenwirbeln in der Kanalströmung erzeugt. Das Wärmeträgerfluid wird umgewälzt, wodurch die Intensität des Wärmeübergangs ansteigt. Als Längswirbelerzeuger dienen angestellte Platten oder Flügel, deren Erhöhung des Druckverlustes sich in Grenzen hält. Allerdings wurde gefunden, daß weitere Verbesserungen erstrebenswert sind.

Gleiches gilt für einen weiteren bekannten Wärmeübertrager (EP-A-338 704), bei dem der Kanal von der oberen Kanalwand nach unten abstehende sowie von der unteren Kanalwand nach oben abstehende Platten enthält. Die Platten laufen parallel zueinander schräg zur Strömungsrichtung des Wärmeträgerfluids von einer Kanalseitenwand zur anderen. Zwischen vertikal einander gegenüberliegenden Platten ist ein Spalt gebildet, der ungefähr der Plattenhöhe entspricht. Die Platten zwingen also die Strömung in die eine Richtung, während eine senkrecht dazu verlaufende Strömung im Spalt zwischen den Platten entsteht.

Der Erfindung liegt die Aufgabe zugrunde, bei den Vorrichtungen der eingangs genannten Art den Wärmeübergang weiter zu verbessern.

Zur Lösung dieser Aufgabe dienen die Merkmale im kennzeichnenden Teil des Patentanspruchs 1 bzw. des Patentanspruchs 3.

Überraschenderweise hat sich gezeigt, daß das Aufreißen der Grenzschichtströmung in Verbindung mit den Längswirbeln zu einer sprunghaften Steigerung des Wärmeübergangs führt. Durch Versuch und Berechnung wurde festgestellt, daß die Längswirbel in Kombination mit dem Aufreißen der Grenzschichtströmung eine Erhöhung des Wärmeübergangskoeffizienten um den Faktor 4 und mehr erbringen können, bezogen auf entsprechende Verhältnisse an einer glatten Wand. Diese Steigerung des Wärmeübergangs ist möglich, ohne den Druckverlust in gleichem Maße zu erhöhen, wie es im Falle einer Kanalströmung eine zum Erzielen der gleichen Steigerung des Wärmeübergangs notwendige Verringerung des hydraulischen Durchmessers eines glattwandigen Kanals bewirken würde. Dies kann z.B. dazu benutzt werden, den hydraulischen Durchmesser zu vergrößern, so daß die gewünschte Steigerung des Wärmeübergangs ohne Erhöhung der Druckverluste möglich wird.

Die gewünschte entsprechende Oberflächenrauhigkeit kann man in gewissem Umfang bereits durch eine äquivalente Sandrauhigkeit erzielen. Vorteilhafter hingegen ist es, die Grenzschichtströmung durch Welligkeit, insbesondere durch Rippenrauhigkeit aufzureißen, und zwar vorzugsweise unter Bildung von Karman-Wirbeln.

In Weiterbildung der Erfindung wird vorgeschlagen, daß, bei Ausbildung einer Kanalströmung des Wärmeträgerfluids zwischen der Wand und einer Gegenfläche, die Längswirbel von der Gegenfläche erzeugt werden. Überraschenderweise wurden gefunden, daß sich die Kombination der Tütenwirbel mit der aufgerissenen Grenzschichtströmung unter diesen Umständen ganz besonders vorteilhaft auswirkt. Die Erzeugung der Tütenwirbel kann so gesteuert werden, daß letztere nicht an derjenigen Fläche besonders wirksam sind, von der sie erzeugt werden, sondern vielmehr an der gegenüberliegenden Fläche.

Im Rahmen der Erfindung liegt es, die Gegenfläche ebenfalls an einer dem Wärmeübergang unterworfenen Wand vorzusehen. Unter diesen Umständen kann man auch sie mit entsprechender Oberflächenrauhigkeit ausstatten, vorzugsweise unter gleichzeitiger Erzeugung von Tütenwirbeln an der gegenüberliegenden Wand.

Die Erfindung ist anwendbar unabhängig davon, ob Wärme von der Wand auf das Wärmeträgerfluid übertragen werden soll oder umgekehrt. Auch kann die Wand beidseitig einer Wärmeträgerfluidstörmung ausgesetzt sein, in der Längswirbel erzeugt werden. Die Wand kann dann beidseitig mit der entsprechenden Oberflächenrauhigkeit versehen sein. Dabei besteht die Möglichkeit, daß Wärme nach beiden Seiten von der Wand abgegeben oder aufgenommen wird. Alternativ kann die Wärme von der einen Fluidströmung durch die Wand hindurch in die andere Fluidströmung übertragen werden.

Als besonders vorteilhaft hat es sich herausgestellt, daß das Verhältnis zwischen dem Abstand der Wellen zueinander und der Höhe der Wellen etwa 6-10 beträgt.

Der Begriff Welligkeit ist weit auszulegen. Neben bogenförmigen Gestaltungen fallen hierunter auch in der Wand vorgesehene z.B. scharfkantige Vertiefungen. Vorzugsweise allerdings sind die Wellen als Rippen ausgebildet. In jedem Falle kann die Verteilung regelmäßig oder unregelmäßig sein. Auch können sich die Wellen über längere oder kürzere Abschnitte der Wand erstrecken. Beispielsweise kann es sich um auf die Wand aufgesetzte Klötze handeln.

Die Längswirbelerzeuger werden vorzugsweise in Bereichen hoher Geschwindigkeit angeordnet, wobei ihre Ausrichtung so gewählt wird, daß sie ihre höchste Wirkungsamkeit auf der Wand im Bereich der aufgerissenen Grenzschichtströmung entwickeln.

In Weiterbildung der Erfindung sind die Längswirbelerzeuger als rechteckige Flügel ausgebildet und paarweise angeordnet, wobei die Flügel jedes Paares in geringem Abstand zueinander stehen und einen Winkel von 60-120°, vorzugsweise von etwa 90° einschließen, dessen gedachte Spitze gegen die Strömungsrichtung des Wärmeträgerfluids weist. Es hat sich gezeigt, daß diese Anordnung geeignet ist, ein Optimum zwischen Wärmeübergangskoeffizient und Druckverlust einzustellen. Vergleichbares gilt für eine alternative Ausführungsform, nach der die Längswirbelerzeuger als rechteckige Flügel ausgebildet sind, die parallel zueinander stehen und mit der Strömungsrichtung des Wärmeträgerfluids einen Winkel von 30-60°, vorzugsweise von etwa 45° bilden.

Die Oberfläche der Flügel beträgt vorzugsweise insgesamt bis etwa 20% der Fläche der Wand, wobei ferner vorgeschlagen wird, daß die Streckung der Flügel etwa 0,5 beträgt. Die Flügel wirken also, auch wenn sie an der dem Wärmeübergang unterworfenen Wand angeordnet sind, nicht als wesentliche Vergrößerung der Wärmeübertragungsfläche.

In Weiterbildung der Erfindung beträgt die Höhe der Flügel etwa 0,5-0,6 des Abstandes zwischen der Wand und der Gegenfläche.

Häufig ist es vorteilhaft, die Gegenfläche an einer ebenfalls dem Wärmeübergang unterworfenen Wand auszubilden und mit Welligkeit zu versehen. Die Längswirbelerzeuger werden dann so gestaltet bzw. angeordnet, daß sie auf beide aufgerissene Grenzschichtströmungen einwirken. Das Wärmeträgerfluid kann unter diesen Umständen beidseitig Wärme aufnehmen oder abgeben.

Ein weiteres vorteilhaftes Merkmal kann darin bestehen, daß die Rückseite der bzw. jeder Wand einen mit Längswirbelerzeugern besetzten Strömungskanal begrenzt und mit Welligkeit versehen ist. Unter diesen Umständen kann die Wand nach beiden Seiten Wärme aufnehmen oder Wärme abgeben. Auch kann sie dazu dienen, Wärme an der einen Seite aufzunehmen und an der anderen Seite abzugeben.

In wesentlicher Weiterbildung der Erfindung wird vorgeschlagen, daß die Wand von der Wand einer Brennkammer, insbesondere einer Turbinenbrennkammer gebildet wird, die auf ihrer Außenseite mit der entsprechenden Wellligkeit versehen ist, und daß die Gegenfläche von einem die Brennkammer umgebenden Mantel gebildet wird. Vorzugsweise werden dabei die Wellen von wendelförmig um die Brennkammer herumgewickeltem Draht gebildet.

Die Erfindung wird im folgenden anhand bevorzugter Ausführungsbeispiele erfindungsgemäßer Vorrichtungen im Zusammenhang mit der beiliegenden Zeichnung näher erläutert. Die Zeichnung zeigt in:
- Fig. 1: einen Teilschnitt entlang der Linie I-I in Fig. 2 durch eine erste Ausführungsform;
- Fig. 2: einen Teil-Grundriß der Vorrichtung nach Fig. 1;
- Fig. 3: einen Teilschnitt durch eine abgewandelte Ausführungsform;
- Fig. 4: einen Ausschnitt einer weiteren abgewandelten Ausführungsform in perspektivischer Darstellung;
- Fig. 5: einen durch den Strömungskanal gelegten Schnitt entlang der Linie V-V in Fig. 6;
- Fig. 6: einen Blick in den Strömungskanal, gesehen von vorne in Fig. 4.

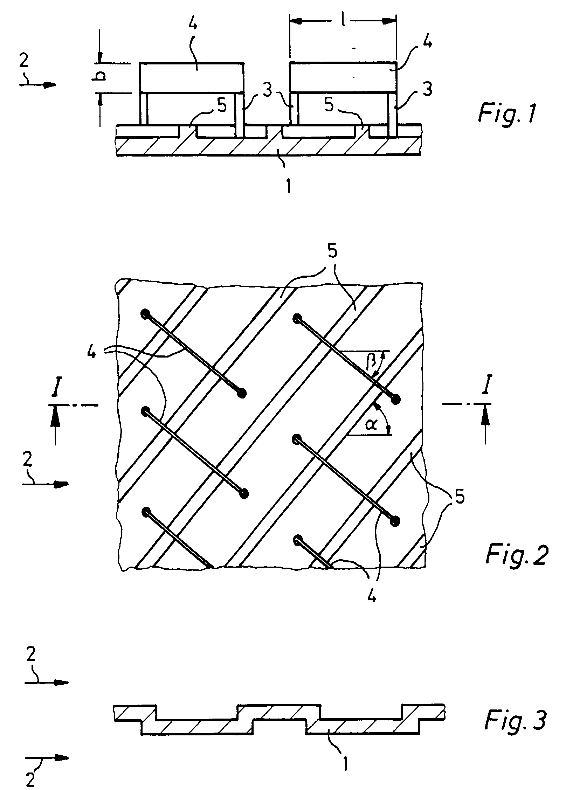

Fig. 1 zeigt eine Wand 1, an deren Oberseite ein Wärmeträgerfluid entlangströmt. Die Strömungsrichtung ist durch einen Pfeil 2 angedeutet. Auf der Wand 1 sind Ständer 3 angeordnet, die Längswirbelerzeuger 4 tragen. Letztere liegen in einem Bereich hoher Strömungsgeschwindigkeit des Wärmeträgerfluids, wobei sie so ausgerichtet sind, daß die erzeugten Tütenwirbel ihre Wirksamkeit vor allen Dingen auf der Oberseite der Wand 1 entfalten.

Die Wand 1 ist mit einer Oberflächenrauhigkeit versehen, die dazu dient, die Grenzschichtströmung des Wärmeträgerfluids entlang der Wand aufzureißen. Dies in Verbindung mit den erzeugten Tütenwirbeln ergibt einen verbesserten Wärmeübergang zwischen der Wand und dem Wärmeträgerfluid, und zwar bei günstigen Verhältnissen bezüglich der Reibungsverluste. Die Oberflächenrauhigkeit besteht aus einer Welligkeit, und zwar werden die Wellen von Rippen 5 gebildet, wobei das Verhältnis zwischen dem Abstand der Rippen zueinander und der Höhe der Rippen 8 beträgt. Dies fördert die Ausbildung von Karman-Wirbeln beim Aufreißen der Grenzschichtströmung.

In Fig. 2 schließen die Rippen 5 mit der Strömungsrichtung des Wärmeträgerfluids einen Winkel α = 50° ein. Ferner bilden in Fig. 2 die Längswirbelerzeuger 4 mit der Strömungsrichtung des Wärmeträgerfluids einen Anstellwinkel β = 45°. Dabei stehen sie parallel zueinander. Sie sind als rechteckige Flügel ausgebildet, wobei ihre Oberfläche insgesamt 20% der Fläche der Wand ausmacht. Die Streckung der Flügel beträgt 0,5. Sie ist definiert als das Verhältnis des Quadrates der Flügelbreite b zur Flügelfläche b x l.

Bei der abgewandelten Ausführungsform nach Fig. 3 ist die Welligkeit der Wand 1 so gestaltet, daß sie zu beiden Seiten der Wand wirksam wird. In Verbindung mit zugeordneten Längswirbelerzeugern ergeben sich also die erfindungsgemäßen Vorteile eines erhöhten Wärmeübergangs bei günstigen Reibungsverlusten auf jeder Seite der Wand, sei es beim beidseitigen Kühlen oder Erwärmen, sei es bei der Wärmeübertragung von einem Fluid auf das andere.

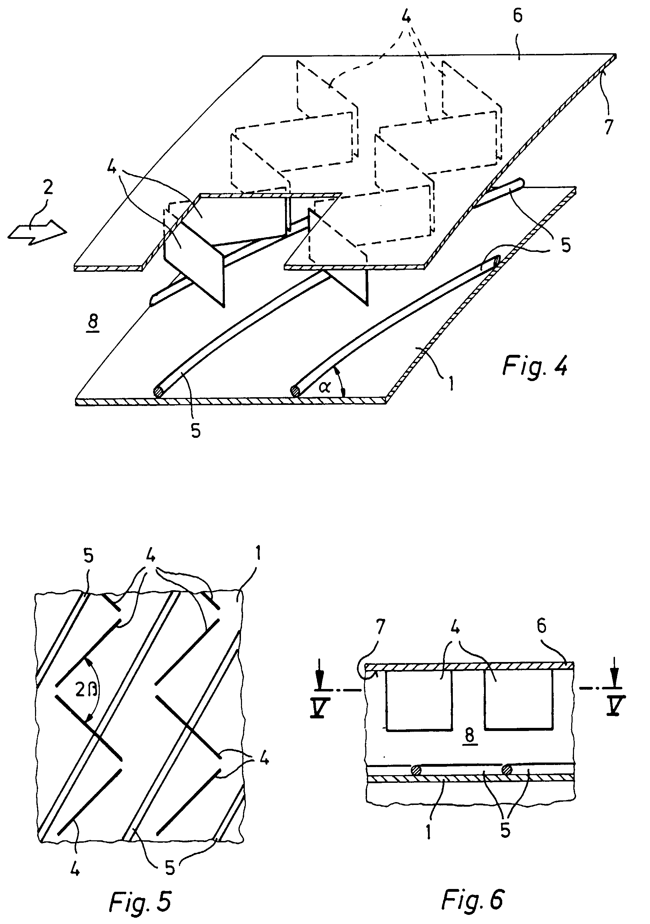

Das Ausführungsbeispiel nach den Fig. 4 bis 6 zeigt die Anwendung der Erfindung auf eine Brennkammer, deren Wand 1 zylindrisch ausgebildet und von einem Mantel 6 umgeben ist. Letzterer definiert auf seiner Unterseite eine Gegenfläche 7. Die Wand 1 und die Gegenfläche 7 begrenzen einen Strömungskanal 8, der in Richtung des Pfeils 2 von Kühlluft durchströmt wird.

Auch hier sind die Längswirbelerzeuger 4 als rechteckige Flügel ausgebildet, jedoch werden sie nicht von der Wand 1 getragen, sondern vielmehr von der Gegenfläche 7 des Mantels 6. Die Flügel sind zu pfeilförmigen Paaren zusammengefaßt, deren Spitze gegen die Strömungsrichtung weist. Sie bilden miteinander den doppelten Anstellwinkel 2 β = 90°. Fig. 3 zeigt, daß die Flügel 60% der Höhe des Strömungskanals einnehmen.

Die Rippen 5 definieren auch hier die Welligkeit der Wand 1. Sie unterscheiden sich von den Rippen nach Fig. 1 dadurch, daß sie aus Draht bestehen, der wendelförmig um die Wand 1 der Brennkammer 1 herumgelegt ist.

Mit der erfindungsgemäßen Konstruktion aus Rippen 5 und Längswirbelerzeugern 4 läßt sich, verglichen mit einer glattwandigen Kanalströmung, eine Erhöhung des Wärmeübergangskoeffizienten um den Faktor 6 erzielen. Der Druckverlust hält sich dabei in Grenzen.

Im Falle des Ausführungsbeispiels nach den Fig. 4 bis 6, kommt eine Wandgestaltung gemäß Fig. 3 nicht in Betracht, da lediglich eine Kühlung der Wand 1 angestrebt wird, nicht jedoch eine erhöhte Wärmeabfuhr aus dem Inneren der Brennkammer.

Soll auch der Mantel 6 einem erhöhten Wärmeübergang unterworfen werden, so wird die Gegenfläche 7 ebenfalls mit einer entsprechenden Oberflächenrauhigkeit versehen. Außerdem können zusätzliche Flügel an der Wand 1 angebracht werden. Ferner kann auch die Außenfläche des Mantels 6 umgestaltet werden, beispielsweise in einer Art, wie sie in Fig. 1 dargestellt ist.

Im Rahmen der Erfindung sind durchaus weitere Abwandlungsmöglichkeiten gegeben. So kann die Welligkeit der Wand durch gerundete Wellenformen erzielt werden. Auch kommt, abweichend von Fig. 3, eine gerundete Mäanderform in Frage. Wird mit Rippen gearbeitet, so können diese im Querschnitt beliebig geformt sein, beispielsweise halbrund, dreieckig, trapezförmig o. dgl.. Gleiches gilt für etwaige Wandvertiefungen. Die Längswirbelerzeuger können von der Rechteckform abweichen und beispielsweise deltaförmig ausgebildet sein. Ferner kann von der pfeilförmigen Anordnung der Flügel, die Paare von gegenläufigen Tütenwirbeln erzeugen, und von der parallelen Anordnung der Flügel, die gleichgerichtete Tütenwirbel hervorrufen, abgewichen werden. Beispielsweise kann am Austrittsende des Strömungskanals dafür gesorgt werden, daß die dort noch vorhandenen Längswirbel durch Gegenwirbel neutralisiert werden. Ferner können auch solche Flügel verwendet werden, die an einer Querkante befestigt sind, so daß sie mit beiden Längskanten und mit der anderen Querkante in die Strömung hineinragen. Eine besonders einfache Konstruktion besteht darin, die Flügel aus der zugehörigen Wand auszustanzen, sofern ein Fluiddurchtritt durch die Wand zugelassen werden kann.

Als Oberflächenrauhigkeit kommt im übrigen auch eine Sandrauhigkeit in Frage, sofern dadurch ein ausreichendes Aufreißen der Grenzschichtströmung gewährleistet ist.

## Patentansprüche

1. Wärmeübertrager mit einer dem Wärmeübergang unterworfenen Wand, an der ein Wärmeträgerfluid entlangströmt und auf der in die Strömung des Wärmeträgerfluids hineinragende Längswirbelerzeuger angeordnet sind, deren Wirbel an der Wand wirksam sind,
**dadurch gekennzeichnet,**
daß die Wand (1) zum Aufreißen der Grenzschichtströmung des Wärmeträgerfluids mit einer entsprechenden Oberflächenrauhigkeit versehen ist.

2. Wärmeübertrager nach Anspruch 1, dadurch gekennzeichnet, daß, bei Ausbildung einer Kanalströmung des Wärmetägerfluids zwischen der Wand (1) und einer Gegenfläche (7), die Längswirbel von der Gegenfläche erzeugt werden.

3. Wärmeübertrager mit mindestens einem Strömungskanal für ein Wärmeträgerfluid, der von einer dem Wärmeübergang unterworfenen Wand und einer Gegenfläche begrenzt ist, wobei in den Strömungskanal Längswirbelerzeuger hineinragen, deren Wirbel an der Wand wirksam sind,
**dadurch gekennzeichnet,**
daß die Wand (1) mit einer unter einem Winkel von etwa 30-90° zur Strömungsrichtung des Wärmeträgerfluids verlaufenden Welligkeit zum Aufreißen der Grenzschichtströmung des Wärmeträgerfluids versehen ist und daß die Längswirbelerzeuger (4) durch Ständer (3) mit der Wand (1) und/oder der Gegenfläche (7) verbunden sind oder von der Gegenfläche (7) abstehen.

4. Wärmeübertrager nach Anspruch 3, dadurch gekennzeichnet, daß das Verhältnis zwischen dem Abstand der Wellen zueinander und der Höhe der Wellen etwa 6-10 beträgt, wobei die Wellen vorzugsweise als Rippen (5) ausgebildet sind.

5. Wärmeübertrager nach Anspruch 3 oder 4, dadurch gekennzeichnet, daß die Längswirbelerzeuger (4) als rechteckige Flügel ausgebildet und paarweise angeordnet sind, wobei die Flügel jedes Paares in geringem Abstand zueinander stehen und einen Winkel von 60-120°, vorzugsweise von etwa 90° einschließen, dessen gedachte Spitze gegen die Strömungsrichtung des Wärmeträgerfluids weist, oder daß die Längswirbelerzeuger (4) als rechteckige Flügel ausgebildet sind, die parallel zueinander stehen und mit der Strömungsrichtung des Wärmeträgerfluids einen Winkel von 30-60°, vorzugsweise von etwa 45° bilden.

6. Wärmeübertrager nach Anspruch 5, dadurch gekennzeichnet, daß die Oberfläche der Flügel insgesamt bis etwa 20 % der Fläche der Wand (1) beträgt, wobei vorzugsweise die Streckung der Flügel (Verhältnis des Quadrates der Flügelbreite zur Flügelfläche) etwa 0,5 beträgt und wobei ferner vorzugsweise die Höhe der Flügel etwa 0,5-0,6 des Abstandes zwischen der Wand (1) und der Gegenfläche (7) beträgt.

7. Wärmeübertrager nach einem der Ansprüche 3 bis 6, dadurch gekennzeichnet, daß die Gegenfläche (7) an einer ebenfalls dem Wärmeübergang unterworfenen Wand ausgebildet und mit Welligkeit versehen ist, wobei vorzugsweise die Rückseite der bzw. jeder Wand (1) einen mit Längswirbelerzeugern besetzten Strömungskanal begrenzt und mit Welligkeit versehen ist.

8. Wärmeübertrager nach einem der Ansprüche 3 bis 7, dadurch gekennzeichnet, daß die Wand (1) von der Wand einer Brennkammer, insbesondere einer Turbinenbrennkammer gebildet wird, die auf ihre Außenseite mit der entsprechenden Welligkeit versehen ist, und daß die Gegenfläche (7) von einem die Brennkammer umgebenden Mantel (6) gebildet wird.

9. Wärmeübertrager nach Anspruch 8, dadurch gekennzeichnet, daß die Wellen von wendelförmig um die Brennkammer herumgewickeltem Draht gebildet werden.

## Claims

1. Heat transfer device with a wall subject to heat transfer, along which a heat-transport fluid flows and on which longitudinal vortex generators are arranged protruding into the flow of the heat-transport fluid, the vortices of said longitudinal vortex generators acting on said wall,
characterised in that
the wall (1) is provided with a corresponding surface roughness to break down the boundary-layer flow of the heat-transport fluid.

2. Heat transfer device according to claim 1, characterised in that, when a channel flow of the heat-transport fluid is formed between the wall (1) and a surface opposite said wall (7), the longitudinal vortices are generated by the opposite surface.

3. Heat transfer device with at least one flow channel for a heat-transport fluid, which is delimited by a wall subjected to heat transfer and an opposite surface, longitudinal vortex generators whose vortices act on said wall protruding into said flow channel,
characterised in that,
the wall (1) is provided with a waviness running at an angle of approximately 30 to 90 ° to the direction of flow of the heat-transport fluid and breaking down the boundary-layer flow of the heat-transport fluid and that the longitudinal vortex generators (4) are connected to the wall (1) and/or the opposite surface (7) by means of stands (3) or stand out from the opposite surface (7).

4. Heat transfer device according to claim 3, characterised in that the ratio between the distance of the waves to each other and the height of the waves is roughly 6 to 10, the waves being preferably designed as ribs (5).

5. Heat transfer device according to claim 3 or 4, characterised in that the longitudinal vortex generators (4) are designed as rectangular wings and arranged in pairs, the wings of each pair being at a short distance from each other and forming an angle of 60 to 120°, preferably of roughly 90 °, the imaginary vertex of which points against the direction of flow of the heat-transport fluid, or that the longitudinal vortex generators (4) are designed as rectangular wings which are parallel to each other and form an angle of 30 to 60 °, preferably roughly 45°, with the direction of flow of the heat-transport fluid.

6. Heat transfer device according to claim 5, characterised in that the total surface area of the wings constitutes up to approximately 20 % of the surface area of the wall (1), the area ratio of the wings (ratio of the square of the wing width to the wing area) being preferably roughly 0.5 and the height of the wings furthermore being preferably roughly 0.5 to 0.6 times the distance between the wall (1) and the opposite surface (7).

7. Heat transfer device according to any one of claims 3 through 6, characterised in that the opposite surface (7) is formed on a wall also subject to heat transfer and is provided with waviness, the back of the wall or each wall (1) preferably delimiting a flow channel in which longitudinal vortex generators are arranged and being provided with waviness.

8. Heat transfer device according to any one of claims 3 through 7, characterised in that the wall (1) is formed by the wall of a combustion chamber, in particular a turbine combustion chamber, whose outside is provided with corresponding waviness, and that the opposite surface (7) is formed by a jacket (6) surrounding the combustion chamber.

9. Heat transfer device according to claim 8, characterised in that the waves are formed by wire wound in coils around the combustion chamber.

## Revendications

1. Dispositif de transmission de chaleur avec une paroi soumise au transfert de chaleur, sur laquelle s'écoule un fluide d'échange de chaleur et où sont disposés des générateurs de tourbillons longitudinaux faisant saillie dans l'écoulement du fluide d'échange de chaleur et dont les tourbillons produisent leur effet sur la paroi, caractérisé par le fait que la paroi (1) présente une rugosité de surface correspondante pour arracher l'écoulement de la couche limite du fluide d'échange de chaleur.

2. Dispositif de transmission de chaleur selon la revendication 1, caractérisé par le fait qu'en cas de formation d'un écoulement de canal du fluide d'échange de chaleur entre la paroi (1) et une surface opposée (7), les tourbillons longitudinaux sont formés par ladite surface opposée.

3. Dispositif de transmission de chaleur avec au moins un canal d'écoulement pour le fluide d'échange de chaleur, le canal étant délimité par une paroi soumise au transfert de chaleur et une surface opposée et où des générateurs de tourbillons longitudinaux font saillie dans le canal d'écoulement dont les tourbillons produisent leur effet sur la paroi, caractérisé par le fait que la paroi (1) présente une ondulation, s'étendant sous un angle d'environ 30 à 90° par rapport à la direction de l'écoulement du fluide d'échange de chaleur, pour arracher l'écoulement de la couche limite du fluide d'échange de chaleur et que les générateurs de tourbillons longitudinaux (4) sont liés par des jambages (3) avec la paroi (1) et/ou la surface opposée (7) ou qu'ils s'éloignent de la surface opposée (7).

4. Dispositif de transmission de chaleur selon la revendication 3, caractérisé par le fait que le rapport entre la distance des ondes les unes par rapport aux autres et la hauteur des ondes est d'environ 6 à 10, les ondes étant, de préférence, conçues sous forme de nervures (5).

5. Dispositif de transmission de chaleur selon l'une des revendications 3 ou 4, caractérisé par le fait que les générateurs de tourbillons (4) sont conçus sous forme d'ailes rectangulaires disposées par paires, les ailes de chaque paire étant disposées à courte distance les unes par rapport aux autres et enfermant un angle de 60 à 120°, de préférence de 90°, dont la pointe supposée montre vers la direction d'écoulement du fluide d'échange de chaleur, ou que les générateurs de tourbillons (4) sont conçus sous forme d'ailes rectangulaires disposées parallèlement les unes par rapport aux autres et formant avec la direction d'écoulement du fluide d'échange de chaleur un angle de 30 à 60°, de préférence d'environ 45°.

6. Dispositif de transmission de chaleur selon la revendication 5, caractérisé par le fait que la surface des ailes comprend en tout jusqu'à environ 20% de la surface de la paroi (1), l'extension des ailes (le rapport entre la largeur au carré et la surface d'une aile) étant, de préférence, de 0,5 et la hauteur des ailes étant, de préférence, de 0,5 à 0,6 de la distance entre la paroi (1) et la surface opposée (7).

7. Dispositif de transmission de chaleur selon l'une des revendications 3 à 6, caractérisé par le fait que la surface opposée (7) est formée à une paroi soumise également au transfert de chaleur et munie d'une ondulation, le verso de la paroi respectivement de chaque paroi (1) délimitant, de préférence, un canal d'écoulement muni de générateurs de tourbillons longitudinaux et présentant une ondulation.

8. Dispositif de transmission de chaleur selon l'une des revendications 3 à 7, caractérisé par le fait que la paroi (1) est formée par la paroi d'une chambre de combustion, plus particulièrement d'une chambre de combustion d'une turbine, dont la partie extérieure présente une ondulation correspondante, et que la surface opposée (7) est formée par une enveloppe (6) entourant la chambre de combustion.

9. Dispositif de transmission de chaleur selon la revendication 8, caractérisé par le fait que les ondes sont formées par un fil enroulé autour la chambre de combustion de façon hélicoïdale.
